Europäisches Patentamt

(19) **European Patent Office**

Office européen des brevets

(11) Publication number: **0 159 789**
**B1**

(12) **EUROPEAN PATENT SPECIFICATION**

(45) Date of publication of patent specification: **17.05.89**

(51) Int. Cl.⁴: **F 16 H 13/04**

(21) Application number: **85301623.6**

(22) Date of filing: **08.03.85**

(54) **A power transmission mechanism.**

(30) Priority: **09.03.84 JP 45249/84**
**24.03.84 JP 57088/84**

(43) Date of publication of application:
**30.10.85 Bulletin 85/44**

(45) Publication of the grant of the patent:
**17.05.89 Bulletin 89/20**

(84) Designated Contracting States:
**BE CH DE FR GB IT LI SE**

(56) References cited:
**FR-A- 369 481**
**FR-A- 648 099**
**US-A-2 764 030**
**US-A-3 807 243**

(73) Proprietor: **Nemoto Kikaku Kogyo Co., Ltd.**
**No. 1095-15, Yoshihashi**
**Yachiyo-shi Chiba-ken (JP)**

(72) Inventor: **Nemoto, Isao**
**No. 6-11-24, Higashinarashino**
**Narashino-shi Chiba-ken (JP)**

(74) Representative: **Higgins, Michael Roger et al**
**MARKS & CLERK 57/60 Lincoln's Inn Fields**
**London WC2A 3LS (GB)**

Courier Press, Leamington Spa, England.

## Description

This invention relates to a power transmission mechanism.

Hitherto there have been proposed various types of power transmission mechanisms applying many types of gears such as a planetary gear system, a bevel gear system, a worm with worm wheel system and the like.

Such conventional mechanisms, however, have generally complicated structures and need to use gears which spontaneously entails increased manufacturing cost. Further, the complicated structure increases the size of the mechanism with increased cost which is the greater part of the cost of the complete machine when such a large size power transmission mechanism is incorporated thereinto.

Moreover, in cases of the mechanisms applying the bevel gear system and the worm with worm wheel system, an axis of the input shaft is crossed with an axis of the output shaft at right angle to one another or they are crossed at a predetermined angle which has troubled the designers when the machine is intended to be designed into a compact type. Accordingly, it has been desired to provide a power transmission mechanism of a compact size but having an enhanced power increase and decrease ratio wherein an axis of the input shaft and an axis of the output shaft are arranged parallel or in alignment.

Both FR—A—648 099 and US—A—2 764 030 disclose a power transmission mechanism which comprises an input rotary shaft and an output rotary shaft (with parallel axes in the case of FR—A—648 099 as defined in the first part of claim 1 and coaxial in the case of US—A—2 764 030) and in which power transmission is by means of a plurality of balls interengaged between the shafts.

It is, therefore, a principle of the object of the invention to provide at reduced cost a power transmission mechanism of compact size but having an elevated increase and decrease ratio in which an axis of the input shaft and an axis of the output shaft are arranged in alignment or in parallel to achieve a positive power transmission without however entailing any back lash effect.

The invention provides a power transmission mechanism as defined in Claim 1.

The invention will be described by way of examples of preferred embodiments with reference to the accompanying drawings, wherein:—

Figure 1 is a partially sectioned front elevation of the power transmission mechanism according to the invention;

Figure 2 is a cross sectional view taken along the line A—A of Figure 1;

Figure 3 is a sectional view taken along the line B—B of Figure 1;

Figure 4 is a fragmentarily enlarged sectional view showing the positions of the confronted screw thread grooves;

Figure 5 is a sectional front elevation of the power transmission mechanism according to the invention;

Figure 6 is a cross sectional view taken along the line C—C of Figure 5;

Figure 7 is a sectional view taken along the line D—D of Figure 5;

Figure 8 is a fragmentarily enlarged sectional view of the case body; and

Figure 9 is a fragmentarily enlarged sectional view of an essential part of Figure 8.

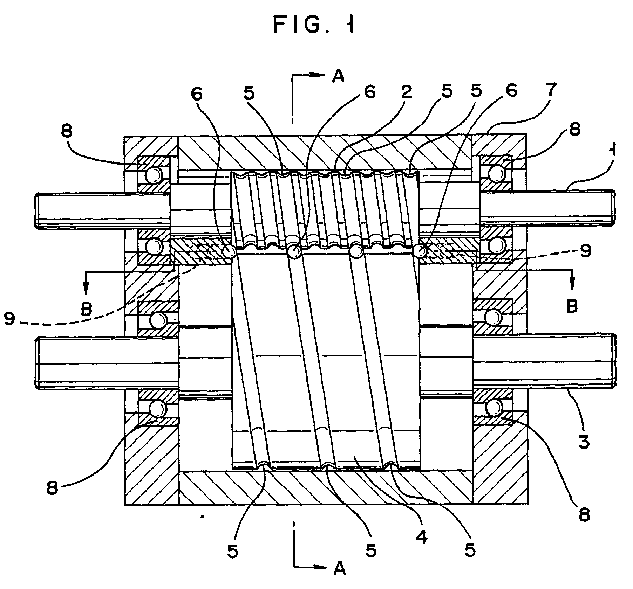

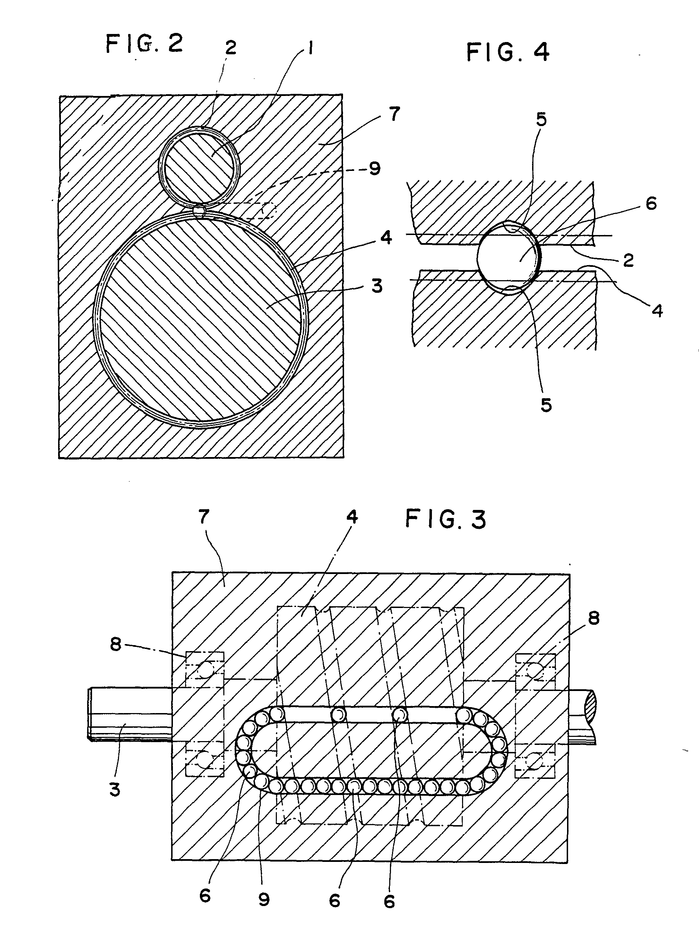

In the accompanying drawings of Figure 1 to 4, the reference numeral 1 stands for a first rotary shaft which is provided at its periphery with a (small screw thread) first screw thread 2 of for example pitch P1 and pitch circle diameter D1. The reference numeral 3 represents a second rotary shaft which is provided at its periphery with a (large screw thread) second screw thread 4 of pitch nP1 (n denotes an integer) and pitch circle diameter nD1 of the same integer times as the pitch and the pitch circle diameter of the first screw thread 2.

The first rotary shaft 1 and the second rotary shaft 3 are arranged in parallel with an upper and lower relation, that is, one above the other. Further, the distance between the first rotary shaft 1 and the second rotary shaft 3 is so determined that screw thread groove 5 of the first screw thread 2 is confronted with (i.e. tangential to) screw thread groove 5 of the second screw thread 4 at every n pitch so that the screw thread grooves 5 are interengaged with one another through balls 6. The first and the second rotary shafts 1 and 3 are rotatably supported in a support body 7 by means of bearings 8.

As particularly illustrated in Figure 4, the radius of the screw thread groove 5 is such a size, relative to the diameter of the ball 6, as for the sides of the groove 5 to contact the ball 6, leaving a crescent-shaped space between the ball 6 and the bottom of the screw thread groove 5.

Moreover, the first rotary shaft 1 and the second rotary shaft 3 are arranged in such a way that the ball 6 is positioned on a tangential line between the first screw thread 2 and the second screw thread 4.

As shown in Figure 2, in order to prevent the ball 6 from falling off the tangential line a support body 7 is internally constructed such that the first rotary shaft 1 and the second rotary shaft 3 are rotatably supported therein and between the first rotary shaft 1 and the second rotary shaft 3 is formed a groove 9 at a right angle to the line, or plane, of the axes of the first and second rotary shafts 1 and 3 with a width sufficient enough to pass the balls 6 therethrough so that the ball 6 is moved only along the tangential line.

The ball 6 is moved following to the sequential displacements of the positions of the confronted screw thread grooves 5 of the first rotary shaft 1 and the second rotary shaft 3. Thus, the ball 6 must be supplied to the positions where the screw thread grooves 5 are sequentially confronted to one another. For this purpose, in accordance with movements of the screw thread grooves 5 the ball 6 is circulated to the positions of the sequentially confronting screw thread grooves 5.

As the first rotary shaft 1 and the second rotary shaft 3 are arranged in the upper and lower relation as hereinbefore described, groove 9 for circulating the balls 6 is formed horizontally into an elliptical shape in which the balls 6 are moved keeping a distance of a predetermined pitch of the confronted screw thread grooves 5 when the ball 6 are positioned between the confronted screw thread grooves 5 although the balls 6 when located in another part of the circulation groove 9 are moved in a row.

Accordingly, when the first rotary shaft 1 is turned as an input shaft for one revolution the balls 6 are moved for only 1/n pitch of the screw thread groove 5 of the second rotary shaft 3 with rotation of the second rotary shaft 3 for that fraction, because the first rotary shaft 1 and the second rotary shaft 3 have respectively the screw threads 2 and 4 of the pitches P1 and nP1. Thus, the screw thread groove 5 of the second rotary shaft 3 is confronted with that of the first rotary shaft 1 at every nth turn. Namely, for one revolution of the first rotary shaft 1 the output of the second rotary shaft 3 is reduced to 1/n revolution. On the contrary, in case the first rotary shaft 1 is provided as an output shaft whereas the second rotary shaft 3 operates as an input shaft, an output speeded up to n times revolution may be obtained. Further, as to the pitch and the pitch circle diameter, the second rotary shaft 3 is powered up to the n integer time as the first rotary shaft 1, so that the lead angles of the screw thread grooves 5 are substantially identical. Thus, the ball 6 receives no resistance at the lead angle, which removes theh slipping effect of the ball 6 and ensures a positive speed increase or decrease ratio.

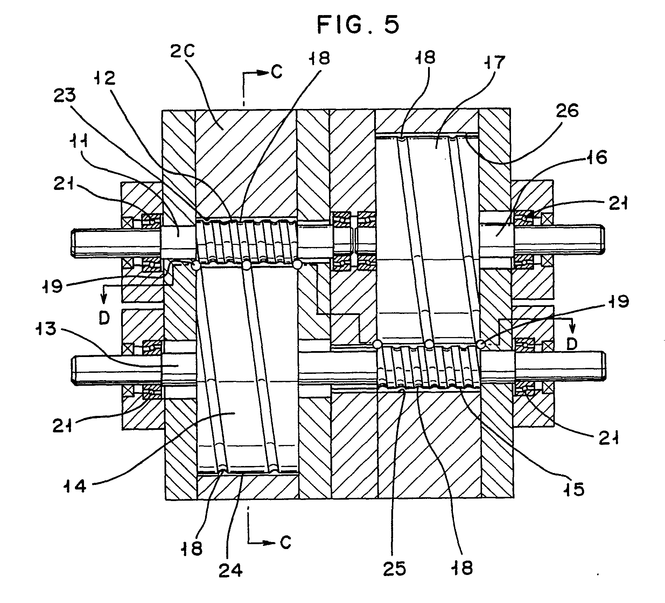

In another embodiment as illustrated in Figures 5 to 9, the reference numeral 11 represents a first rotary shaft having at its periphery a small screw thread 12 of pitch P2 and pitch circle diameter D2. The reference numeral 13 stands for a second rotary shaft having at its periphery a large screw thread 14 of pitch nP2 (n denotes an integer) and pitch circle diameter nD2 of the same integer times as the pitch and the pitch circle diameter of the first small screw thread 12 together with a further small screw thread 15 of the same pitch P2 and the pitch circle diameter D2 as those of said small screw thread 12. Further, the reference numeral 16 represents a third rotary shaft which at its periphery is provided with a further large screw thread 17 of the same pitch nP2 and pitch circle diameter nD2 as those of said large screw thread 14.

The first rotary shaft 11 and the second rotary shaft 13 are arranged in parallel with the upper and lower relation so that the small screw thread 12 and the large screw thread 14 are confronted (i.e. tangential) to one another. In this arrangement, a screw thread groove 18 comes to match with the large screw thread 14 at every nth pitch of the small screw thread 12 and a distance between the first rotary shaft 11 and the second rotary shaft 13 is determined in such a way that the confronted screw thread grooves 18 are interengaged with one another through ball 19. The first rotary shaft 11 and the second rotary shaft 13 are rotatably supported in a case body 20 through bearings 21.

The second rotary shaft 13 and the third rotary shaft 16 are arranged in parallel with the upper and lower relation while the third rotary shaft 16 in aligned with the first rotary shaft 11, so that the further small screw thread 15 of the second rotary shaft 13 is confronted with (i.e. tangential to) the further large screw thread 17 of the third rotary shaft 16. In this arrangement, the screw thread groove 18 comes to match with the further large screw thread 17 every nth pitch of the further small screw thread 15 and a distance between the second rotary shaft 13 and the third rotary shaft 16 is determined such that the screw thread grooves 18 are made to register with one another through the ball 19. The second rotary shaft 13 and the third rotary shaft 16 are rotatably supported in the case body 20 through the bearings 21. The screw thread grooves 18 for the small screw thread 12 with the large screw thread 14 as well as the further small screw thread 15 with the further large thread screw 17 are formed into such a shape that the balls 19 are caused to engage with the screw thread grooves 18 at their two opposite points.

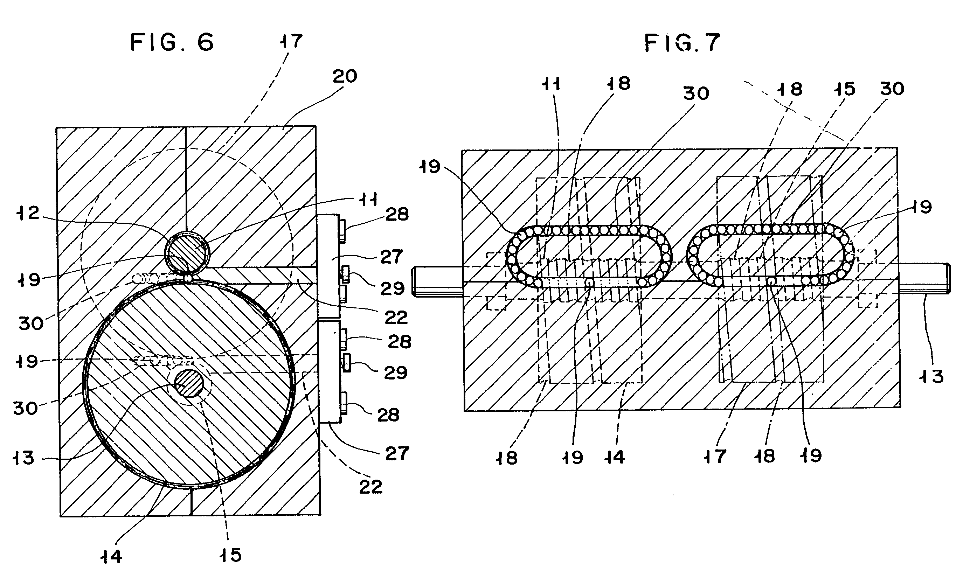

The balls 19 are moved in accordance with sequential displacements of the positions of the confronted screws thread grooves 18 when the rotary shafts 11, 13 and 16 are turned. Thus, the balls 19 must be supplied to the positions of the sequentially confronting screw thread grooves 18. For that purpose, the balls 19 removed in accordance with displacements of the screw thead grooves 18 are circulated for supply into the position of the screw thread grooves 18 which are again confronted sequentially. Further, since the rotary shaft 11, 13 and 16 are arranged in the upper and lower relations, grooves 30 for circulating the balls 19 are horizontally formed into the elliptical shapes and positioned between the first rotary shaft 11 and the second rotary shaft 13 as well as the second rotary shaft 13 and the third rotary shaft 16 as illustrated in Figures 6 and 7.

The distance between the adjacent balls 19 when positioned between the confronted screw thread grooves 18 is determined such that the balls are moved keeping the distance of the pitch of the confronted screw thread grooves 18 when the balls are positioned between the screw thread grooves 18, while the balls are moved in a row in another part of the circulation groove 30.

As hereinbefore described, the rotary shafts 11, 13 and 16 are arranged so that the balls 19 are positioned on the tangential line formed between the first small screw thread 12 and the first large screw thread 14 and also on the tangential line formed between the second small screw thread 15 and the second large screw thread 17.

In the case body 20, between a first small screw thread receiving chamber 23 and a first large screw thread receiving chamber 24 as well as a second small screw thread receiving chamber 25 and a second large screw thread receiving chamber 26, there is provided a horizontally movable ball position regulating plate 22 adapted to embrace the ball 19 from a lateral position opposite to the circulation groove 30. This ball position regulating plate 22 is formed in to a thickness convenient to be horizontally and conveniently insertable from the lateral direction. An extremity of the plate is formed into a substantially wedged configuration by cutting off according to the curvatures of said chambers 23, 24, 25 and 26.

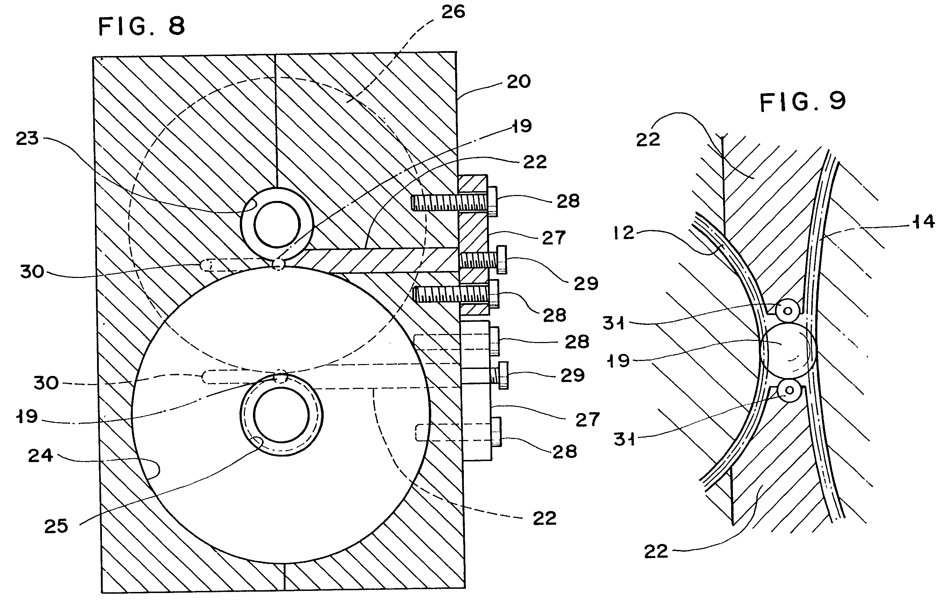

In the case body 20, an adjusting base plate 27 (Fig. 8) is fixed by means of a screw 28 and an adjusting screw 29 is threaded into the base plate 27 so that an extremity of the adjusting screw 29 is made into contact with a tail end of the ball position regulating plate 22 or is threaded thereinto (not shown). Upon turning the adjusting screw 29, the ball position regulating plate 22 is urged against the ball 19 or retracted therefrom for holding the ball 19 in the predetermined position.

The ball position regulating plate 22 may also be formed in such a way that it may be moved against or retracted from the ball 19.

Further, the shape of the extremity of the ball position regulating plate 22 is not restricted to the configuration as described in the foregoing but it may be designed such that a rotary body such as a roller 31 is engaged by the extremity of the plate 22 so that the ball 19 even when urged by the extremity of the ball position regulating plate 22 is conveniently revolved for achieving a smooth power transmission effect without however entailing any backlash effect, Fig. 9.

When the pitches and the pitch circle diameters of said large screw thread 14 and said further large screw thread 17 are made six times those of said small screw thread 12 and said further small screw thread 15 and the first rotary shaft 11 is turned as an input shaft, the relationship between the confronted thread screw grooves 18 of the first rotary shaft 11 and the second rotary shaft 13 provides a pitch of 1:6 so that one revolution of the first rotary shaft 11 makes only ⅙ revolution of the second rotary shaft 13. Then, the relationship between the confronted screw thread grooves 18 of the second rotary shaft 13 and the third rotary shaft 16 also has a pitch of 1:6, so that one revolution of the second rotary shaft 13 provides similarly only ⅙ revolution of the third rotary shaft 16. Accordingly, when the first rotary shaft as an input shaft 11 is turned for one revolution the third rotary shaft 16 acting as an output shaft provides ⅙ × ⅙ revolution, i.e. with a speed reduction to 1/36 revolution. Further, when the third rotary shaft 16 is provided as an input shaft, the first rotary shaft 11 acting on the contrary as an output shaft is speeded up to 36 times revolution. While, when the second rotary shaft 13 is provided as an input shaft, the first rotary shaft 11 is speeded up to six times revolution with reduction of the speed of third rotary shaft 16 to ⅙ revolution.

Moreover, when the first rotary shaft 11 or the third rotary shaft 16 is provided as an input shaft, the third rotary shaft 16 or the first rotary shaft 11 is positioned in alignment to provide an input shaft of the highest speed increase and decrease ratio. Further, when the first rotary shaft 11 operates as an input shaft, reduction ratios of ⅙ at the second shaft 13 and 1/36 at the third rotary shaft 16 may be obtained, while when the third rotary shaft 16 operates as an input shaft, the outputs of increased speed increase and decrease ratio of 6 times and 36 times may be obtained.

Even with such the high speed increase and decrease ratios as 1/36 times and 36 times, the diameters of said large screw thread 14 and said further large screw thread 17 in relation to said small screw thread 12 and said further small screw thread 15 may be provided to only four times for ensuring to provide a compact arrangement. Further, for the pitch and pitch circle diameter said large screw thread 14 and the further large screw thread 17 in relation to said small screw thread 12 and said further small screw thread 15 are provided as n integer times, so that the lead angles of the screw thread grooves become substantially identical with negligible resistance against the balls 19 at the lead angle and free of slipping effect of the ball 19, when ensures a positive speed increase and decrease ratio.

In case the input shaft is not needed to be arranged in alignment with the output shaft, the arrangements of the rotary shafts 11, 13 and 16 may selectively be changed with convenient determinations of the diameters of the screw threads 12, 14, 15 and 17.

Although the invention has been described with reference to application of three rotary shafts, the multiple stages of the rotary shafts may also be applied in order to obtain a greater speed increase and decrease ratio.

As hereinbefore fully described, the power transmission mechanism according to the invention may be provided at low cost and with the enhanced speed increase and decrease ratio even in a compact size but without entailing any backlash effect for providing a positive power transmission effect.

Namely, by the arrangement of the mechanism according to the invention as fully described hereinbefore a reduction of the speed of several integer times or an increase of the speed of several integer times may be obtained with the pitch circle diameter of several integer times to provide a compact arrangement of the large screw thread. Further, since the lead angles are provided identical to one another no resistance against the balls 6 and 19 occurs at the lead angle free of slipping effect with a positive speed increase and decrease ratio. Moreover, since the rotary shafts are arranged on the parallel axes confronting the small screw thread with the large screw thread and the power may be transmitted alternately along two axes, with an even number of rotary shafts the input shaft and the output shaft are in parallel while, with an odd number of rotary shafts, the input shaft and the output shaft are in alignment with convenience of incorporating the mechanism into the machine and simplification of the whole machine. Thus, by the convenient combinations of the small screw thread with the large screw thread, the speed reduction ratio of parts or the speed increase ratio of the times corresponding to numbers of the combination may be obtained. Moreover, in the arrangement according to the invention, the speed increase and decrease ratio may be attained by applying the screw thread grooves 5 and 18 but without applying the gear and the like, so that the mechanism may be manufactured without necessitating any gear cutting process which ensures manufacture of the mechanism at the reduced cost.

Further, in the mechanism according to the invention, the balls 6 and 19 may be continuously supplied into the position where the confronting screw threads are made to register with or confront one another, so that a continuous speed increase and decrease ratio may smoothly be obtained.

In case screw threads are made into register with one another through the balls 6 and 19, the balls may be conveniently rolled even free of clearance between the contacting positions of the screw threads without entailing any backlash for a positive speed increase and decrease ratio because the contacting directions of the screw threads are different from the rolling directions of the ball 6 and 19.

## Claims

1. A power transmission mechanism comprising a first rotary shaft (1, 11) arranged on a first axis and a second rotary shaft (3, 13) arranged on a second axis parallel to said first axis, wherein one of the two shafts (1, 3) is an input shaft of the mechanism whilst the other of the two shafts (1, 3) is an output shaft of the mechanism, and wherein power transmission from the input shaft (1, 3) to the output shaft (1, 3) is effected by means of a plurality of balls (6, 19) inter-engaged between said shafts (1, 3) characterised in that the first rotary shaft (1, 11) and second rotary shaft (3, 13) are respectively provided on their peripheries with a small screw thread (2, 12) and a large screw thread (4, 14) which have substantially identical lead angles, the large screw thread (4, 14) having a pitch (nP1) and a pitch circle diameter (nD1) respectively n times larger, where n is a plural iteger, of the pitch (P1) and the pitch circle diameter (d1) of the small screw thread (2, 12), the small and large screw threads (1, 2, 11, 12) being inter-engaged via said plurality of balls (6, 19), which are arranged so that, at any given time, at least one of said balls (6, 19) is engaged in the grooves (5, 18) of both screw threads (2, 4, 12, 14) and is moved along a line parallel to said axes.

2. A power transmission mechanism as claimed in claim 1 where a third rotary shaft (16) is arranged on said first axis, said second shaft (13) is provided with a further small screw thread (15), said third shaft (16) is provided with a further large screw thread (17), the two large screw threads (14, 17) and the two small screw threads (12, 15) respectively have the same pitches (nP1, P1) and the pitch circle diameters (nD1, D1) and the further small and second large screw threads (15, 17) are tangential to each other and are inter-engaged via a further plurality of balls (19) so that, at any given time, at least one of said further plurality of balls (19) is engaged in the grooves (18) of both further small and second large screw threads (15, 17).

3. A power transmission mechanism as claimed in claim 1 or 2 wherein the balls (6; 19) are guided on at least one respective track (9; 30) tangential to the respective small and large screw threads where the or each respective small screw thread (2; 12, 15) is tangential to the or each respective large screw thread (4; 14, 17).

## Patentansprüche

1. Kraftübertragungsvorrichtung, mit einer ersten Welle (1, 11), die auf einer ersten Achse angeordnet ist, und einer zweiten Welle (3, 13), die auf einer zweiten Achse parallel zu der ersten Achse angeordnet ist, wobei eine der beiden Wellen eine Eingangswelle ist, während die andere der beiden Wellen eine Ausgangswelle ist, und wobei die Kraftübertragung von der Eingangswelle zu der Ausgangswelle durch eine Mehrzahl von Kugeln (6; 19) bewirkt wird, die zwischen den Wellen in Eingriff stehen, dadurch gekennzeichnet, daß die erste Welle (1; 11) und die zweite Welle (3; 13) je auf ihrem Umfang mit einem kleinen Schraubengewinde (2; 12) und einem großen Schraubengewinde (4; 14) versehen sind, die symmetrisch angeordnet sind, wobei das große Schraubengewinde (4; 14) eine Steigung (nP1) bze. einen Rollkreisdurchmesser (nD1) aufweist, der n-mal größer als die Steigung (P1) und der Rollkreisdurchmesser (D1) des kleinen Schraubengewindes (2; 12) ist, wobei n eine ganzzahlige Zahl ungleich 1 ist, wobei das kleine und das große Schraubengewinde tangential zueinander angeordnet sind und miteinander über die Mehrzahl von Kugeln (6; 9) in Eingriff stehen, die so angeordnet sind, daß zu einem beliebigen vorgegebenen Zeitpunkt mindestens eine der Kugeln in den Nuten (5; 18) beider Schraubengewinde ist.

2. Kraftübertragungsvorrichtung nach Anspruch 1, dadurch gekennzeichnet, daß eine dritte Welle (16) auf der ersten Achse angeordnet ist, wobei die zweite Welle (13) mit einem weiteren kleinen Schraubengewinde (15) versehen ist, die dritte Welle (16) mit einem weiteren großen Schraubengewinde (17) versehen ist, die beiden großen Schraubengewinde (14, 17) bzw. die beiden kleinen Schraubengewinde (12, 15) die gleiche Steigung (nP1, P1) und den gleichen Rollkreisdurchmesser (nD1, D1) haben und das weitere kleine und das weitere große Schraubengewinde (15, 17) tangential zueinander angeordnet sind und über eine weitere Mehrzahl von Kugeln (19) miteinander derart in Eingriff stehen, daß zu einem beliebigen vorgegebenen Zeitpunkt mindestens eine der weiteren Mehrzahl von Kugeln (19) in den Nuten (18) beider weiterer kleiner und großer Schraubengewinde (15, 17) in Eingriff steht.

3. Kraftübertragungsvorrichtung nach Anspruch 1 oder 2, dadurch gekennzeichnet, daß die Kugeln (6; 19) auf mindestens je einer Spur (9; 30) tangential zu dem kleinen bzw. großen Schraubengewinde geführt sind, wobei das oder das jeweilige kleine Schraubengewinde (2; 12, 1) tangential zu dem oder den jeweiligen großen Schraubengewinden (4; 14, 17) angeordnet ist.

**Revendications**

1. Mécanisme de transmission de puissance comprenant un premier arbre rotatif (1, 11) agencé sur un premier axe et un second arbre rotatif (3, 13) agencé sur un second axe parallèle audit premier axe, dans lequel l'un des deux arbres est un arbre d'entrée tandis que l'autre des deux arbres est un arbre de sortie du mécanisme, et dans lequel la transmission de puissance de l'arbre d'entrée à l'arbre de sortie est effectuée au moyen d'une pluralité de billes (6, 19) interengagées entre lesdits arbres, caractérisé en ce que le premier arbre rotatif (1, 11) et le second arbre rotatif (3, 13) sont respectivement pourvus sur leurs péripheries d'un petit filetage (2, 12) et d'un grand filetage (4, 14) qui sont agencés symétriquement, le grand filetage (4, 14) qui sont agencés symétriquement, le grand filetage (4, 14) ayant un pas (nP1) et un diamètre de cercle primitif (nD1) respectivement n fois plus grands, où n est un miltiple entier du pas (P1) et du diamètre (d1) du cercle primitif du petit filetage (2, 12), le petit filetage et le grand étant mutuellement tangentiels et inter-engagés par l'intermédiaire de ladite pluralité de billes (6, 19) qui sont disposées de manière qu'à tout moment au moins l'une desdites billes soit engagée dans les gorges (5, 18) des deux filetages.

2. Mécanisme de transmission de puissance suivant la revendication 1, dans lequel un troisième arbre rotatif (16) est agencé sur ledit premier axe, ledit second arbre (13) comportant un autre petit filetage (15), ledit troisième arbre (16) comportant un autre grand filetage (17) les deux grands filetages (14, 17) et les deux petits filetages (12, 15) ayant respectivement les mêmes pas (nP1, P1) et les mêmes diamètres de cercles primitifs (nD1, D1) et les autres petit et second grands filetages (15, 17) étant mutuellement tangentiels et inter-engagés par l'intermédiaire d'une autre pluralité de billes (19) de manière qu'à tout instant donné, au moins l'une de ladite autre pluralité de billes (19) soit engagée dans les gorges (18) des deux autres petit et second grand filetages (15, 17).

3. Mécanisme de transmission de puissance suivant la revendication 1 ou 2, dans lequel les billes (6, 19) sont guidées sur au moins une voie respective (9, 30) tangentielle aux grand et petit filetages respectivement, le ou chaque petit filetages respectivement, le ou chaque petit filetage (2, 12, 15) respectivement étant tangential au ou à chaque grand filetage (4, 14, 17) respectivement.

EP 0 159 789 B1

FIG. 1

1

FIG. 2

FIG. 4

FIG. 3

# FIG. 5

3

FIG. 6

FIG. 7

EP 0 159 789 B1

FIG. 8

FIG. 9

EP 0 159 789 B1